Europäisches Patentamt

European Patent Office

Office européen des brevets

(19)

(11) Veröffentlichungsnummer: **0 285 857**
**B1**

(12) # EUROPÄISCHE PATENTSCHRIFT

(45) Veröffentlichungstag der Patentschrift:
31.10.90

(51) Int. Cl.⁵: **E05C 9/18**, E05B 65/44,
H02B 1/26

(21) Anmeldenummer: 88103935.8

(22) Anmeldetag: 12.03.88

(54) Verschlussvorrichtung für eine Schaltschranktür.

(30) Priorität: 30.03.87 DE 3710563

(43) Veröffentlichungstag der Anmeldung:
12.10.88 Patentblatt 88/41

(45) Bekanntmachung des Hinweises auf die Patenterteilung:
31.10.90 Patentblatt 90/44

(84) Benannte Vertragsstaaten:
AT BE CH DE ES FR GB GR IT LI LU NL SE

(56) Entgegenhaltungen:
EP-A- 0 180 825
FR-A- 2 583 452
US-A- 4 650 230

(73) Patentinhaber: Rittal-Werk Rudolf Loh GmbH & Co. KG,
Auf dem Stützelberg, D-6348 Herborn(DE)

(72) Erfinder: Lehr, Lothar, Dresselndorfer Strasse 16,
D-5909 Burbach(DE)
Erfinder: Wetzel, Manfred, Hauptstrasse 13,
D-6344 Ewersbach(DE)

(74) Vertreter: Vogel, Georg,
Hermann-Essig-Strasse 35 Postfach 105,
D-7141 Schwieberdingen(DE)

## Beschreibung

Die Erfindung betrifft einen Schaltschrank mit Schrankkorpus und daran angelenkter Schranktür, bei dem mittels eines an der Schranktür angebrachten Schubstangenschlosses und mittels an der Schranktür durch das Schubstangenschloß axial verstellbarer Schubstangen die Schranktür in Schließstellung am Schrankkorpus gehalten ist, wobei im Schubstangenschloß ein in Drehbewegungen versetzbares Betätigungsglied mit den Schubstangen gekoppelt ist und diese axial verstellt und wobei die dem Schubstangenschloß abgekehrten Schließenden der Schubstangen in der Schließstellung am Schrankkorpus angebrachte Schließflächen hintergreifen und in der Offenstellung aus dem Bereich der Schließflächen herausgeführt sind, bei dem mit dem Betätigungsglied des Schubstangenschlosses ein Drehriegel drehfest verbunden ist, der beim Verdrehen des Betätigungsgliedes mit einem Riegelansatz hinter einen am Schrankkorpus angebrachten Halteblock eindrehbar ist und im Bereich des Schubstangenschlosses die Schranktür mit dem Schrankkorpus verspannt.

Wie die DE-OS 1 950 153 zeigt, kann das Schubstangenschloß mit einem Schlüssel oder einer Handhabe betätigt werden und eine oder zwei Schubstangen verstellen. Die Verriegelung der Schranktür am Schrankkorpus erfolgt dabei nur über die Schließenden der Schubstangen. Dabei sind, wie das DE-GM 8 429 153 zeigt, die Schubstangen, an der Schranktür axial verstellbar geführt und die Schließenden sind gabelförmig ausgestaltet. Die Schließenden werden in der Schließstellung auf einen Haltebolzen, der Teil eines am Schrankkorpus befestigten Halteblockes ist, oder auf einen U-förmigen Bügel einer am Schrankkorpus befestigten Platte aufgeschoben.

Diese Verriegelung der Schranktür am Schrankkorpus ist nicht ausreichend, insbesondere dann, wenn der Schaltschrank sehr hoch ist und die Schranktür nicht verwindungssteif ist. Außerdem ist die Verspannung der Schranktür am Schrankkorpus nicht gleichmäßig, so daß die Schließstellung der Schranktür auch nicht eindeutig abgedichtet ist.

Aus der FR-A1 2 583 452 ist ein Schubstangenschloß der eingangs erwähnten Art bekannt, bei dem mit der Verdrehung des Betätigungsgliedes ein Drehriegel mit verdreht wird, der mit einem Riegelansatz hinter einen Halteblock eindrehbar ist, der an dem Schaltschrank oder dgl. angebracht ist. Der Drehriegel verspannt dabei die Schranktür im Bereich des Schubstangenschlosses mit dem Schrankkorpus. Über die Ausbildung des Verschlusses am Ende der Schubstangen ist in dieser Druckschrift nichts offenbart. Gerade bei großen Schranktüren ist aber eine eindeutige Verspannung der Schranktür an der Ober- und Unterkante des Schrankkorpus wichtig.

Es ist Aufgabe der Erfindung, einen Schaltschrank der eingangs erwähnten Art zu schaffen, bei dem auch bei großen Abmessungen der Schranktür am Ende der Schubstangen eine eindeutige Verspannung und Verriegelung der Schranktür am Schrankkorpus erreicht wird und bei dem dazu einfache robuste Bauteile zum Einsatz kommen können, die großen Spannkräften standhalten können.

Diese Aufgabe wird nach der Erfindung dadurch gelöst, daß die Schließenden der Schubstangen drehbar gelagerte Rollen tragen, die beim Verdrehen des Betätigungsgliedes und Verstellen der Schubstangen aus der Offenstellung zunächst über im spitzen Winkel zur Verstellrichtung der Schubstangen stehende, der Schranktür abgekehrte Übergangsabschnitte von am Schrankkorpus angebrachten Schließblöcken geführt eine Anzugsbewegung auf die an den Schrankkorpus herangeführte Schranktür übertragen, daß beim Weiterdrehen des Betätigungsgliedes und Weiterverstellen der Schubstangen die Rollen die Schließblöcke auf der der Schranktür abgekehrten Seite hintergreifen und entsprechend geneigte, der Schranktür zugekehrte Verriegelungsabschnitte der Schließenden mit den Übergangsabschnitten der Schließblöcke in Wirkverbindung kommen und die Schranktür am Schrankkorpus verspannen und daß die Rollen beim Übergang von dem Übergangsabschnitt auf die Rückseite der Schließblöcke einen Verriegelungsquersteg passieren und hinter diesen einrasten.

Bei dieser Ausgestaltung werden die Schließenden der Schubstangen über die Übergangsabschnitte der Schließblöcke sicher eingeführt, wenn die Schranktür an den Schrankkorpus heranbewegt und das Schubstangenschloß in Richtung Schließstellung betätigt wird. Dabei rollen die Rollen auf den Übergangsabschnitten der Schließblöcke ab, die so stabil sind, daß dabei keinerlei Beschädigung auftreten kann. Haben die Rollen die Übergangsabschnitte passiert, dann ist die Schranktür in eine definierte Stellung zum Schrankkorpus gebracht. Die Rollen werden hinter die Schließblöcke geführt, d.h. auf die der Schranktür abgekehrte Rückseite derselben. Dann übernehmen die der Schranktür abgekehrten geneigten Übergangsabschnitte der Schließblöcke in Verbindung mit den Verriegelungsabschnitten der Schließenden im Bereich der Schubstangenenden die Verspannung der Schranktür am Schrankkorpus. Die Verriegelungsabschnitte der Schließenden werden dabei an den Übergangsabschnitten entlang bewegt, so daß eine ausreichende Spannkraft, d.h. Anzugskraft, auf die Schranktür ausgeübt wird, wenn das Schubstangenschloß bis in die Schließstellung weitergedreht wird. Hat die Schranktür die definierte vorläufige Schließstellung erreicht, dann passieren beim Weiterdrehen des Betätigungsgliedes des Schubstangenschlosses die Rollen den Verriegelungsquersteg und rasten hinter diesem ein. Die Schranktür ist dann am Schrankkorpus verspannt und verriegelt. Beim Weiterdrehen des Betätigungsgliedes und des Drehriegels aus der vorläufigen Schließstellung in die endgültige Schließstellung kommt auch der Riegelansatz auf die der Schranktür abgekehrte Seite des Halteblockes und verspannt die Schranktür am Schrankkorpus.

Die über die Rollen der Schließenden eingeleitete Anzugsbewegung wird dann optimal auf die Schranktür übertragen, wenn die Ausgestaltung so ausgeführt ist, daß die Drehachsen der Rollen parallel zu der Schranktür verlaufen und senkrecht zu der Anlenkachse der Schranktür stehen.

Ist nach einer Ausgestaltung vorgesehen, daß die Schließenden als getrennte Teile ausgebildet und mit den freien Enden der Schubstangen verbunden sind, daß das Schließende und die zugeordnete Schubstange zwischen zwei Kunststoffteilen gehalten sind, und daß die beiden Kunststoffteile zusammen mit dem Schließende in einem hülsenförmigen, mit der Innenseite der Schranktür verbundenen Führungsgehäuse verstellbar geführt sind, dann können die Schubstangen dennoch aus Abschnitten eines Flachbandmaterials hergestellt werden und über die Kunststoffteile wird eine geräuscharme Verstellung in den Führungsgehäusen erreicht.

Die Drehlagerung der Rollen ist nach einer Ausgestaltung so gelöst, daß das Schließende der Schubstange abgekehrt in zwei Lagerlaschen ausläuft, zwischen denen die Rolle drehbar gelagert ist, und daß im Anschluß an die Lagerlaschen das Schließende der Schranktür zugekehrt und gegenüber der Rolle abgesetzt in den geneigten Verriegelungsabschnitt übergeht.

Ist weiterhin vorgesehen, daß der Schließblock zur Mittelquerebene symmetrisch ausgebildet ist und der Schranktür abgekehrt zwei gegeneinander geneigte Übergangsabschnitte aufweist, dann kann der Schließblock für die beiden Schließstangenenden verwendet werden, da er mit denselben Befestigungsaufnahmen um 180° verdreht am Schrankkorpus festgemacht werden kann.

Die Verbindung zwischen der Schubstange, dem Schließende und den beiden Kunststoffteilen ist nach einer Ausgestaltung so ausgeführt, daß die beiden Kunststoffteile, die zugeordnete Schubstange und das Schließende mittels eines Querstiftes zusammengehalten sind, der in fluchtende Bohrungen dieser Teile eingesetzt und durch das Führungsgehäuse darin gehalten ist.

Die zusätzliche Verspannung der Schranktür am Schrankkorpus im Bereich des Schubstangenschlosses von der vorläufigen bis zur endgültigen Schließstellung wird dadurch erreicht, daß der Halteblock im Bereich der Drehachse des Drehriegels halbkreisförmig ausgespart ist, wobei der Durchmesser der Aussparung dem Durchmesser des im Querschnitt runden Drehriegels entspricht, daß der radial abstehende Riegelansatz des Drehriegels in der Offenstellung senkrecht zur Verstellrichtung der Schubstangen steht und außerhalb der Aussparung des Halteblockes liegt und daß erst nach einer Verdrehung des Drehriegels um einen vorgegebenen Drehwinkel in Schließrichtung der Riegelansatz im Bereich der Aussparung auf die der Schranktür abgekehrte Rückseite des Halteblockes eindreht und beim Weiterdrehen in Schließstellung die Schranktür im Bereich des Schubstangenschlosses mit dem Schrankkorpus verspannt.

Die eindeutige Abdichtung der am Schrankkorpus verspannten Schranktür ergibt sich dadurch, daß der Schaltschrank ein Rahmengestell aufweist, das im Bereich der offenen Seite des Schrankkorpus einen umlaufend abstehenden Dichtungssteg bildet, und daß die Innenseite der Schranktür auf den umlaufenden Dichtungssteg abgestimmt mit einem umlaufenden Dichtungselement versehen ist.

Die Erfindung wird anhand eines in den Zeichnungen dargestellten Ausführungsbeispiels näher erläutert. Es zeigt:

Fig. 1 in perspektivischer Teilansicht die im Bereich der Schließkante am Schrankkorpus und an der Schranktür angebrachten Teile für einen eindeutig verspannten Verschluß des Schaltschrankes,

Fig. 2 die an den Schrankkorpus heranbewegte Schranktür in der Stellung, in der die Betätigung des Schubstangenschlosses einsetzt,

Fig. 3 wie die Schranktür über die Rollen der Schließenden in eine vorläufige Schließstellung gebracht wird und

Fig. 4 die zusätzliche Verspannung der Schranktür am Schrankkorpus im Bereich des Schubstangenschlosses.

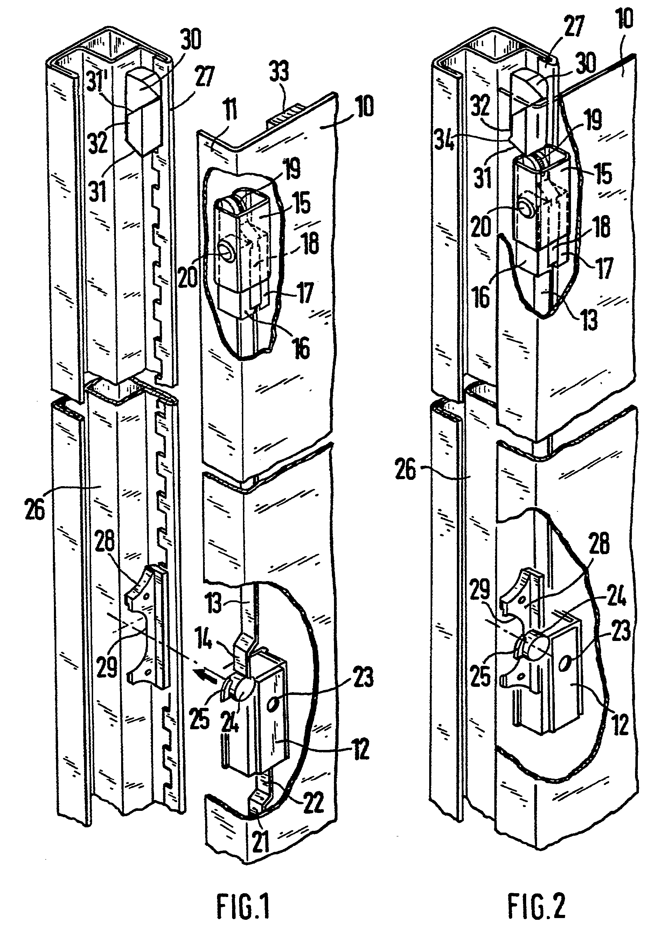

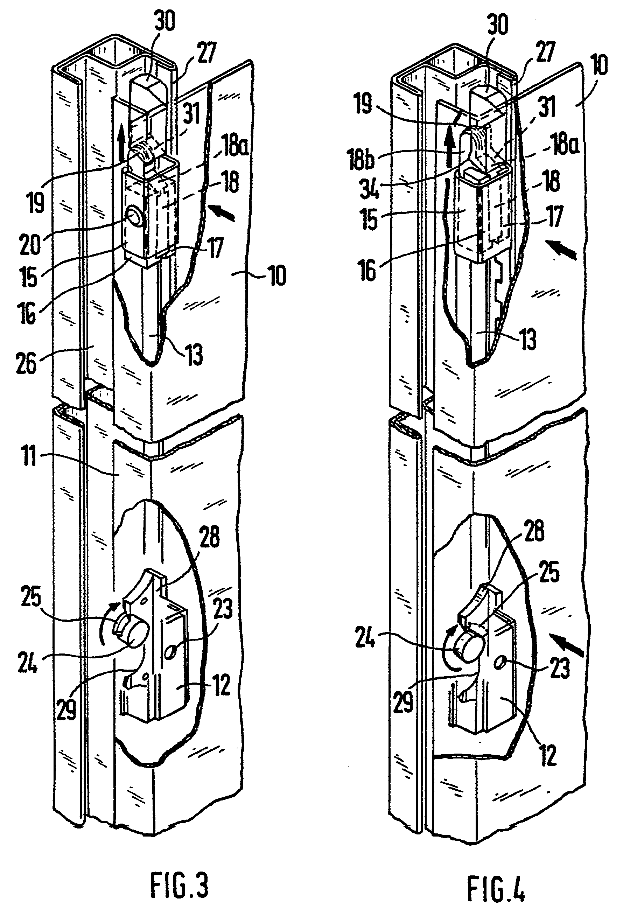

Bei dem in den Fig. 1 bis 4 gezeigten Ausführungsbeispiel ist die plattenförmige Schranktür 10 umlaufend mit der Abkantung 11 versehen. Die Anlenkung der Schranktür 10 am Schrankkorpus und der Aufbau des Schrankkorpus sind für die vorliegende Erfindung nicht von Bedeutung. Von dem Schrankkorpus ist nur der vertikale, im Bereich der Schließkante angeordnete Rahmenschenkel 26 gezeigt, der in den abstehenden Dichtungssteg 27 ausläuft. An diesem Dichtungssteg 27 des Rahmenschenkels sind die Schließblöcke 30 und der Halteblock 28 befestigt. Auf der Innenseite der Schranktür 10 ist in der Mitte der Höhe das Schubstangenschloß 12 angebracht, dessen nicht dargestelltes Betätigungsglied über die Öffnung 23 zugänglich ist. Das Betätigungsglied ist mit zwei Schubstangen 13 und 21 gekoppelt, die durch die Abkröpfungen 14 und 22 diametral zum Betätigungsglied gebracht sind. Bei einer Verdrehung des Betätigungsgliedes werden die Schubstangen 13 und 21 gegenläufig axial verstellt, wobei die Drehrichtung des Betätigungsgliedes festlegt, ob die Schubstangen 13 und 21 in die Schließ- oder Offenstellung verstellt werden.

Die Schubstangen 13 und 21 sind im Bereich der Schließkante unmittelbar im Anschluß an die Abkantung 11 verstellbar geführt, wobei die Endbereiche mit dem als getrenntes Teil ausgebildeten Schließende 18 und mit zwei Kunststoffteilen 16 und 17 als Schieber in hülsenförmigen, an der Schranktür 10 befestigten Führungsgehäusen 15 axial verstellbar geführt sind. Die Kunststoffteile 16 und 17 sind identisch ausgebildet und bilden eine Aufnahme für das Ende der Schubstange 13 bzw. 21 und das Schließende 18. Alle Teile tragen fluchtende Bohrungen, durch die ein Querstift gesteckt ist. Dieser Querstift stellt die Verbindung zwischen den Kunststoffteilen 16 und 17, der Schubstange 13 bzw. 21 und dem Schließende 18 her.

Das Schließende 18 läuft auf der der Schubstange 13 bzw. 21 abgekehrten Seite in zwei Lagerlaschen 18b auf, zwischen denen die Rolle 19 drehbar gelagert ist. Dabei steht die Drehachse parallel zur Schranktür 10 und senkrecht zur Schließkante. In dem dem Schließende 18 zugeordneten Bereich des Schrankkorpus ist der Schließblock 30 befestigt, der an seiner Unterseite den im spitzen Winkel zur Verstellrichtung der Schubstangen 13 und 21 geneigten Übergangsabschnitt 31 aufweist und dann in die der Schranktür 10 abgekehrte Rückseite 32 übergeht. Der Schließblock 30 kann zur Mittelquerebene symmetrisch ausgebildet werden, wie der entgegengesetzt geneigte Übergangsabschnitt 31' zeigt. Der so gestaltete Schließblock 30 läßt sich dann mit denselben Befestigungsaufnahmen um 180° verdreht als Schließblock für das an der Schubstange 21 angebrachte Schließende verwenden.

Das Schubstangenschloß 12 weist einen Drehriegel 24 mit radial abstehendem Riegelansatz 25 auf, der drehfest mit dem Betätigungsglied verbunden und mit diesem verdreht wird. Dieser Drehriegel 24 arbeitet mit dem am Schrankkorpus angebrachten Halteblock 28 zusammen, wie noch näher erläutert wird.

Wie Fig. 2 zeigt, wird beim Schließen des Schaltschrankes die Schranktür 10 an den Schrankkorpus heranbewegt. Dabei stehen die Rollen 19 der Schließenden 18 unter dem Übergangsabschnitt 31 des zugeordneten Schließblockes 30. Wir das Betätigungsglied des Schubstangenschlosses 12 in Richtung Schließstellung verdreht, dann wird die Schubstange 13 nach oben und die Schubstange 21 nach unten verstellt. Die Rollen 19 rollen auf den Übergangsabschnitten 31 der Schließblöcke 30 entlang, wie Fig. 3 zeigt. Dabei wird eine Anzugsbewegung auf die Schranktür 10 übertragen. Haben die Rollen 19 die Übergangsabschnitte 31 passiert, gelangen sie auf die Rückseite 32 der Schließblöcke 30, wie Fig. 4 zeigt.

Bei diesem Übergang kommt der Riegelansatz 25 des Drehriegels 24 im Bereich der Aussparung 29 auf die der Schranktür 10 abgekehrte Rückseite des Halteblockes 28 und bringt im Bereich des Schubstangenschlosses 12 eine zusätzliche Verspannung der Schranktür 10 am Schrankkorpus, wie die Fig. 4 zeigt. Dabei kann die Rückseite des Halteblockes 28 so ausgebildet sein, daß eine zusätzliche Anzugsbewegung erreicht wird, wenn der Riegelansatz 25 auf die Rückseite des Halteblockes 28 eingedreht wird. Wie Fig. 3 zeigt, ist der Riegelansatz 25 des Halteblockes 28 bis zum Erreichen der vorläufigen Schließstellung noch nicht mit dem Halteblock 24 in Wirkverbindung.

Das Schließende 18 geht im Anschluß an die Lagerlaschen 18b der Schranktür 10 zugekehrt in den geneigten Verriegelungsabschnitt 18a über, der nach Verlassen der vorläufigen Schließstellung mit dem Übergangsabschnitt 31 des zugeordneten Schließblockes 30 in Wirkverbindung kommt und nach dem Erreichen der endgültigen Schließstellung die Spann- und Schließkraft auf die Schranktür 10 überträgt.

Die Schranktür 10 ist im Bereich der Schließkante dann an drei Stellen eindeutig verspannt und verriegelt.

Beim Öffnen des Schubstangenschlosses 12 wird zunächst die Verspannung und Verriegelung der Schranktür 10 aufgehoben und danach über die Rollen 19 und die Übergangsabschnitte 31 der Schließblöcke 30 die Schranktür 10 endgültig freigegeben.

Da die Rollen 19 beim Übergang von den geneigten Übergangsabschnitten 31 auf die Rückseiten 32 der Schließblöcke 30 die Verriegelungssquerstege 34 passieren müssen, sind die Schließenden 18 der Schubstangen 13 und 21 in der Schließstellung verriegelt. Beim Öffnen der Schranktür 10 muß daher zuerst diese Verriegelung aufgehoben werden. Dazu muß die Schranktür 10 noch näher an den Schrankkorpus herangebracht, d.h. noch mehr verspannt werden, damit die Rollen 19 über die Verriegelungssquerstege 34 hinweg bewegt werden können.

## Patentansprüche

1. Schaltschrank mit Schrankkorpus und daran angelenkter Schranktür (10), bei dem mittels eines an der Schranktür (10) angebrachten Schubstangenschlosses (12) und mittels an der Schranktür (10) durch das Schubstangenschloß (12) axial verstellbarer Schubstangen (13, 22) die Schranktür (10) in Schließstellung am Schrankkorpus gehalten ist, wobei im Schubstangenschloß (12) ein in Drehbewegungen versetzbares Betätigungsglied mit den Schubstangen (13, 22) gekoppelt ist und diese axial verstellt und wobei die dem Schubstangenschloß (12) abgekehrten Schließenden (18) der Schubstangen (13, 22) in der Schließstellung am Schrankkorpus angebrachte Schließflächen hintergreifen und in der Offenstellung aus dem Bereich der Schließflächen herausgeführt sind, bei dem mit dem Betätigungsglied des Schubstangenschlosses (12) ein Drehriegel (24) drehfest verbunden ist, der beim Verdrehen des Betätigungsgliedes mit einem Riegelansatz (25) hinter einen am Schrankkorpus (26) angebrachten Halteblock (28) eindrehbar ist und im Bereich des Schubstangenschlosses (12) die Schranktür (10) mit dem Schrankkorpus (26) verspannt, dadurch gekennzeichnet, daß die Schließenden (18) der Schubstangen (13, 22) drehbar gelagerte Rollen (19) tragen, die beim Verdrehen des Betätigungsgliedes und Verstellen der Schubstangen (13, 21) aus der Offenstellung zunächst über im spitzen Winkel zur Verstellrichtung der Schubstangen (13, 21) stehende, der Schranktür (10) abgekehrte Übergangsabschnitte (31) von am Schrankkorpus (26) angebrachten Schließblöcken (30) geführt eine Anzugsbewegung auf die an den Schrankkorpus (26) herangeführte Schranktür (10) übertragen, daß beim Weiterdrehen des Betätigungsgliedes und Weiterverstellen der Schubstangen (13, 22) die Rollen (19) die Schließblöcke (30) auf der der Schranktür (10) abgekehrten Seite hintergreifen und entsprechend geneigte, der Schranktür (10) zugekehrte Verriegelungsabschnitte (18a) der Schließenden (18) mit den Obergangsabschnitten (31) der Schließblöcke (30) in Wirkverbindung kommen und die Schranktur (10) am Schrankkorpus (26) verspannen und daß die Rollen (19) beim Obergang von dem Obergangsabschnitt (31) auf die Rückseite (32) der Schließblöcke (30) einen Verriegelungsquersteg (32) passieren und hinter diesen einrasten.

2. Schaltschrank nach Anspruch 1, dadurch gekennzeichnet, daß die Drehachsen der Rollen (19) parallel zu der Schranktür (10) verlaufen und senkrecht zu der Anlenkachse der Schranktür (10) stehen.

3. Schaltschrank nach Anspruch 1 oder 2, dadurch gekennzeichnet, daß die Schließenden (18) als getrennte Teile ausgebildet und mit den freien Enden der Schubstangen (13, 21) verbunden sind, daß das Schließende (18) und die zugeordnete Schubstange (13 bzw. 21) zwischen zwei Kunststoffteilen (16,17) gehalten sind, und daß die beiden Kunststoffteile (16,17) zusammen mit dem Schließende (18) in einem hülsenförmigen, mit der Innenseite der Schranktür (10) verbundenen Führungsgehäuse (15) verstellbar geführt sind.

4. Schaltschrank nach einem der Ansprüche 1 bis 3, dadurch gekennzeichnet, daß das Schließende (18) der Schubstange (13, 21) abgekehrt in zwei Lagerlaschen (18b) ausläuft, zwischen denen die Rolle (19) drehbar gelagert ist, und daß im Anschluß an die Lagerlaschen (18b) das Schließende (18) der Schranktür (10) zugekehrt und gegenüber der Rolle (19) abgesetzt in den geneigten Verriegelungsabschnitt (18a) übergeht.

5. Schaltschrank nach einem der Ansprüche 1 bis 4, dadurch gekennzeichnet, daß der Schließblock (30) zur Mittelquerebene symmetrisch ausgebildet ist und der Schranktür (10) abgekehrt zwei gegeneinander geneigte Übergangsabschnitte (31, 31') aufweist.

6. Schaltschrank nach einem der Ansprüche 1 bis 5, dadurch gekennzeichnet, daß die beiden Kunststoffteile (16,17), die zugeordnete Schubstange (13 bzw. 21) und das Schließende (30) mittels eines Querstiftes zusammengehalten sind, der in fluchtende Bohrungen dieser Teile eingesetzt und durch das Führungsgehäuse (15) darin gehalten ist.

7. Schaltschrank nach einem der Ansprüche 1 bis 6, dadurch gekennzeichnet, daß der Halteblock (28) im Bereich der Drehachse des Drehriegels (24) halbkreisförmig ausgespart ist, wobei der Durchmesser der Aussparung (29) dem Durchmesser des im Querschnitt runden Drehriegels (24) entspricht, daß der radial abstehende Riegelansatz (25) des Drehriegels (24) in der Offenstellung senkrecht zur Verstellrichtung der Schubstangen (13, 21) steht und außerhalb der Aussparung (29) des Halteblockes (28) liegt, und daß erst nach einer Verdrehung des Drehriegels (24) um einen vorgegebenen Drehwinkel (etwa 90°) in Schließrichtung der Riegelansatz (25) im Bereich der Aussparung (29) auf die der Schranktür (10) abgekehrte Rückseite des Halteblockes (28) eindreht und beim Weiterdrehen in Schließstellung die Schranktür (10) im Bereich des Schubstangenschlosses (12) mit dem Schrankkorpus (26) verspannt.

8. Schaltschrank nach einem der Ansprüche 1 bis 7, dadurch gekennzeichnet, daß er ein Rahmengestell aufweist, das im Bereich der offenen Seite des Schrankkorpus (26) einen umlaufend abstehenden Dichtungssteg (27) bildet, und daß die Innenseite der Schranktür (10) auf den umlaufenden Dichtungssteg (27) abgestimmt mit einem umlaufenden Dichtungselement (33) versehen ist.

9. Schaltschrank nach einem der Ansprüche 1 bis 8, dadurch gekennzeichnet, daß die Rollen (19) beim Übergang von dem Übergangsabschnitt (31) auf die Rückseite (32) der Schließblöcke (30) einen Verriegelungsquersteg (32) passieren und hinter diesen einrasten.

**Claims**

1. Switch cabinet consisting of cabinet body and thereon hinged cabinet door (10), in which the cabinet door is held in the locked position to the cabinet body by means of a sliding rod lock (12) fitted to the cabinet door (10) and by means of sliding rods, axially adjustable on the cabinet door (10) through the sliding rod lock (12), whereby in the sliding rod lock (12) an operating mechanism, displacable by a rotary movement, is coupled to the sliding rods (13, 22) and moves these axially, and whereby the locking ends (18) of the sliding rods (13, 22) away from the sliding rod lock (12), when in the locked position, grip behind the striking plates fitted to the cabinet body, and in the open position are withdrawn from the region of the striking plates, and further in which a turning catch (24) is rigidly attached to the operating mechanism of the sliding rod lock (12), which on turning the operating mechanism by means of a catch finger (25) can be turned behind the retainer block (28) mounted on the cabinet body (26) and braces the cabinet door (10) to the cabinet body (26), characterised thereby, that the locking ends (18) of the sliding rods (13, 22) carry rotatable rollers (19) which upon turning of the operating mechanism and displacement of the sliding rods (13, 21) from the open position, initially via transition sections (31) standing at a sharp angle to the direction of movement of the sliding rods (13, 21) and away from the cabinet door, guided by the locking blocks (30) mounted on the cabinet body (26), exert a pulling motion on the cabinet door (10) resting against the cabinet body (26), that upon further turning of the operating mechanism and further displacement of the sliding rods (13, 22), the rollers (19) grip behind the locking blocks on the side away from the cabinet door (10) and the correspondingly sloped locking sections (18a) of the locking ends (18) towards the cabinet door (10) come into effective contact with the transition sections (31) of the locking blocks (30) and brace the cabinet door (10) to the cabinet body (26), and that the rollers (19), on crossing from the transition section (31) to the rearside (32) of the locking blocks (30), pass a lateral locking strut and catch behind this.

2. Switching cabinet according to claim 1, characterised thereby, that the axes of revolution of the rollers (19) are parallel to the cabinet door (10) and vertical to the hinge axis of the cabinet door (10).

3. Switching cabinet according to claim 1 or 2, characterised thereby, that the locking ends (18) are formed as separate parts and connected to the free ends of the sliding rods (13, 21), that the locking end (18) and the associated sliding rod (13, 21) are held between two plastic parts (16, 17), and that the two plastic parts (16, 17) together with the locking end (18) are fitted in a sleeve like guide housing (15) mounted on the inner side of the cabinet door (10).

4. Switching cabinet according to one of the claims 1 to 3, characterised thereby, that the locking end (18) away from the sliding rod (13, 21) comes to a stop in two bearing brackets (18b), between which the roller (19) is heldable to turn and that following the bearing brackets (18b) the locking end ( 18 ) facing the cabinet door (10) and offset opposite the roller (19) moves into the sloped locking section.

5. Switching cabinet according to one of the claims 1 to 4, characterised thereby, that the locking block (30) is symmetrically formed about the middle horizontal plane and has two corresponding, reciprocally sloped transition sections (31, 31') away from the cabinet door (10).

6. Switching cabinet according to one of the claims 1 to 5, characterised thereby that the two plastic parts (16, 17), the corresponding slide rod (13 or 21) and the locking end (30) are held together by means of a transversal pin which is positioned in alignment holes in these parts and held by the guide housing (15) therein.

7. Switching cabinet according to one of the claims 1 to 6, characterised thereby that the stop block (28) has a semicircular cut-out (29) in the region of the turning catch (24) whereby the diameter of the cut-out (29) corresponds to the round cross-section of the turning-catch (24), that the radially projecting locking finger (25) of the turning catch (24), when open, stands vertical to the direction of movement of the sliding rods (13, 21) and lies outside the cut-out (29) of the stop block (28), and that, only after a turn of the turning catch (24) through a given angle (approx. 90°) in the locking direction of the locking finger (25) in the region of the cut-out (29) turns to the rear side of the stop block (28) away from the cabinet door (10) and upon further rotation into the locked position braces the cabinet door (10) against the cabinet body (26) in the region of the sliding rod lock (12).

8. Switching cabinet according to one of the claims 1 to 7, characterised thereby, that it has a framework which in the region of the open side of the cabinet body (26) forms a peripheral protruding seal ridge (27), and that the inside of the cabinet door (10) is adjusted to the peripheral seal ridge (27) and fitted with a peripheral sealing element (33).

**Revendications**

1. Armoire à équipement électrique comportant un corps d'armoire et une porte (10) d'armoire, porte articulée sur ce corps, dans laquelle la porte (10) est maintenue en position de fermeture contre le corps d'armoire au moyen d'une serrure (12) à tigees de poussée, serrure montée sur la porte (10), et au moyen de tiges (13, 22) de poussée, susceptibles d'être déplacées axialement au moyen de la serrure (12), un élément d'actionnement, susceptible d'être amené à effectuer des mouvements de rotation, étant couplé dans la serrure (12) aux tiges (13, 22) de poussée et déplaçant celles-ci axialement, et les extrémités (18) de fermeture des tiges (13, 22) de poussée situées à l'opposé de la serrure (12) passant, en position de fermeture, derrière des surfaces de fermeture disposées sur le corps d'armoire et étant, en position d'ouverture, extraites de la zone des surfaces de fermeture, armoire dans laquelle un verrou (24) rotatif est relié, sans pouvoir effectuer de rotation relative, à l'organe d'actionnement de la serrure (12), lequel verrou peut être, lors de la rotation de l'élément d'actionnement, tourné pour pénétrer au moyen d'une saillie (25) de verrouillage derrière un bloc (28) de retenue, monté sur le corps (26) d'armoire, en serrant la porte (10) d'armoire contre le corps (26) de cette armoire dans la zone de la serrure (12), armoire caractérisée en ce que les extrémités (18) de fermeture des tiges (13, 22) de poussée portent des rouleaux (19) montés de façon à pouvoir tourner et qui, lors de la rotation de l'élément d'actionnement et du déplacement des tiges (13, 21) de poussée, exercent d'abord une traction sur la porte (10) qui est amenée contre le corps (26) d'armoire, les tiges étant guidées, à paartir de la position d'ouverture, sur des parties (31), situées du côté opposé à la porte (10), de transition de blocs (30) de fermeture montés sur le corps (26) d'armoire et qui forment un angle aigu par rapport à la direction de déplacement des tiges (13, 21) de poussée; en ce que, lors de la poursuite de la rotation de l'élément d'actionnement et du déplacement des tiges (13, 22) de poussée, les rouleaux (19) passent derrière les blocs (30) de fermeture du côté opposé à la porte (10) d'armoire et des parties (18a) de verrouillage des extrémités (18) de fermeture inclinées de façon correspondante, dirigées vers la porte (10) d'armoire, coopèrent avec les parties (31) de transition des blocs (30) de fermeture et serrent la porte (10) contre le corps (26), et en ce que les rouleaux (19), lors du passage de la partie (31) de transition située du côté arrière (32) des blocs (30) de fermeture, surmontent une nervure (34) transversale de verouillage et s'encliquètent derrière celle-ci.

2. Armoire d'équipement électrique selon la revendication 1, caractérisé en ce que les axes de rotation des rouleaux (19) s'étendent parallèlement à la porte (10) de l'armoire et sont perpendiculaires à l'axe d'articulation de la porte (10).

3. Armoire d'équipement électrique selon la revendication 1 ou 2, caractérisée en ce que les extrémités (18) de fermeture sont réaliées en tant que pièces séparées et sont réaliées aux estrémités libres des tiges (13, 21) de poussées; en ce que les extrémités (18) de fermeture et la tige (13 ou 21) de poussée correspondante sont maintenues entre deux pièces (16, 17) en matière plastique; et en ce que les deux pièces (16, 17) en matière plastique sont guidées de façon à se déplacer avec l'extrémité (18) de fermeture dans un corps (15) de guidage en forme de douille, monté du côté intérieur de la porte (10) d'armoire.

4. Armoire d'équipement électrique selon l'une des revendications 1 à 3, caractérisée en ce que l'extrémité (18) de fermeture de la tige (13, 21) de poussée se termine dans des sens opposés par deux pattes (18b) de support entre lesquelles le rouleau (19) est monté de façon rotative et en ce qu'en se raccordant aux pattes (18b) de support, l'extrémité (18) de fermeture devient la partie (18a) inclinée de verrouillage, en étant dirigée vers la porte (10) de l'armoire et en étant par rapport au rouleau (19).

5. Armoire d'équipement électrique selon l'une des revendications 1 à 4, caractérisée en ce que le bloc (30) de fermeture a une forme symétrique par rapport à un plan transversal médian et ce bloc présente, à l'opposé de la porte (10) de l'armoire, deux parties (31, 31') de transition, inclinées à l'opposé l'une de l'autre.

6. Armoire d'équipement électrique selon l'une des revendications 1 à 5, caractérisée en ce que les deux pièces (16, 17) en matière plastique, la tige (13 ou 21) de poussée associée et l'extrémité (30) de fermeture sont assemblées au moyen d'une broche transversale, qui est mise en place dans des alésages alignés de ces pièces et qui y est maintenue par le corps (15) de guidage.

7. Armoire d'équipement électrique selon l'une des revendications 1 à 6, caractérisée en ce que le bloc (28) de retenue présente un évidement en forme de demi-cercle dans la zone de l'axe de rotation du verrou (24) rotatif, le diamètre de l'évidement (29) correspondant au diamètre du verrou rotatif (24) de section transversale ronde, en ce que la saillie (25) de verrouillage du verrou rotatif (24) qui s'écarte radialement se trouve, en position d'ouverture, perpendiculaire à la direction de déplacement des tiges (13, 21) de poussée et est située en-dehors de l'évidement (29) du bloc (28) de retenue et en ce que ce n'est qu'après une rotation du verrou rotatif (24) d'un angle de rotation donné à l'avance (environ 90°) dans le sens de la fermeture que la saillie (25) de verrouillage pénètre dans la zone de l'évidement (29) situé sur le côté arrière, qui se trouve à l'opposé de la porte (10) d'armoire, du bloc (28) de retenue et, lors de la poursuite de la rotation, jusqu'à ce que la position de fermeture soit atteinte, serre la porte (10) de l'armoire contre le corps (26) de cette armoire dans la zone de la serrure (12).

8. Armoire d'équipement électrique selon l'une des revendications 1 à 7, caractérisé en ce que cette armoire comporte un bâti formant cadre, qui présente, dans la zone du côté ouvert du corps (26) d'armoire, une nervure (27) d'étanchéité qui fait saillie sur tout le tour, et en ce que le côté intérieur de la porte (10) de l'armoire est muni d'un élément (33) d'étanchement en correspondance exacte avec la nervure (27) d'étanchéité qui fait tout le tour.

FIG.1                    FIG.2

FIG.3

FIG.4